(19) Europäisches Patentamt / European Patent Office / Office européen des brevets

(11) **EP 4 625 619 A1**

(12) **EUROPEAN PATENT APPLICATION**

(43) Date of publication:
01.10.2025 Bulletin 2025/40

(21) Application number: 25166901.6

(22) Date of filing: 28.03.2025

(51) International Patent Classification (IPC):
$H01M\ 10/613^{(2014.01)}$    $H01M\ 10/659^{(2014.01)}$
$B32B\ 7/027^{(2019.01)}$

(52) Cooperative Patent Classification (CPC):
H01M 10/613; B32B 7/027; H01M 10/659

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.03.2024 CN 202410381374

(71) Applicant: BYD Company Limited
Shenzhen, Guangdong 518118 (CN)

(72) Inventors:
• DONG, Zhen
  Shenzhen, 518118 (CN)
• XIANG, Ying
  Shenzhen, 518118 (CN)
• CAI, Yaomin
  Shenzhen, 518118 (CN)
• LE, Qianli
  Shenzhen, 518118 (CN)
• SUN, Huajun
  Shenzhen, 518118 (CN)

(74) Representative: Mathys & Squire
The Shard
32 London Bridge Street
London SE1 9SG (GB)

(54) **HEAT-ABSORBING COMPOSITE MATERIAL, HEAT ABSORBER, BATTERY ASSEMBLY, AND ELECTRICAL DEVICE**

(57) The present disclosure provides a heat-absorbing composite material, a heat absorber, a battery assembly, and an electrical device. The heat-absorbing composite material includes a skeleton and a heat-absorbing material. The heat-absorbing material comprises a phase-change material. Holes of the skeleton are filled with the heat-absorbing material. A first surface of the heat-absorbing composite material is located between a second surface of the heat-absorbing composite material and a battery core. $0.2 \leq 2252 \times r \times \rho(S \times x - a \times H) \times 10^{-9}/(0.6 \times Q_c - 360 \times c_p \times M) \leq 30$, where r is the mass content of the phase-change material in the heat-absorbing material, $\rho$ is the density of the heat-absorbing material in $kg/m^3$, x is the thickness of the heat-absorbing composite material in mm, S is the area of the first surface in $mm^2$, a is the area of an orthographic projection of the skeleton on the first surface in $mm^2$, H is the thickness of the skeleton in mm, $Q_c$ is the capacity of the battery core in kJ, $c_p$ is the specific heat capacity of the battery core in $kJ \cdot kg^{-1} \cdot K^{-1}$, and M is the mass of the battery core in kg.

**Description**

## FIELD

The present disclosure relates to the technical field of batteries, and more specifically, to a heat-absorbing composite material, a heat absorber, a battery assembly, and an electrical device.

## BACKGROUND

A battery core provides power support for the use of an electrical device, and the temperature change of the battery core during use also affects the performance and safety of the battery core and the electrical device. In the related art, a heat-absorbing material is arranged on a surface of the battery core, and heat generated by the battery core is taken away in a process such as a phase change of the heat-absorbing material, thereby preventing thermal diffusion and thermal runaway of the battery core. However, at present, the heat-absorbing material is susceptible to damage when subjected to an external force, thereby affecting a heat-absorbing effect thereof.

## SUMMARY

In view of the above, the present disclosure provides a heat-absorbing composite material, a heat absorber, a battery assembly, and an electrical device. The heat-absorbing material can achieve both excellent heat-absorbing performance and mechanical performance, which is beneficial to the use of the heat absorber and improves the use performances of the battery assembly and the electrical device.

In a first aspect, the present disclosure provides a heat-absorbing composite material configured to be arranged on a surface of a battery core. The heat-absorbing composite material includes a skeleton and a heat-absorbing material. The heat-absorbing material comprises a phase-change material. The skeleton has multiple holes. The holes are filled with the heat-absorbing material. The heat-absorbing composite material has a first surface and a second surface oppositely arranged along a thickness direction of the skeleton. The first surface is located between the second surface and the battery core. Values r, p, x, S, a, H, $Q_c$, $c_p$, and M satisfy: $0.2 \leq 2252 \times r \times \rho (S \times x - a \times H) \times 10^{-9}/(0.6 \times Q_c - 360 \times c_p \times M) \leq 30$, where r is the mass content of the phase-change material in the heat-absorbing material, $\rho$ is the density of the heat-absorbing material in kg/m$^3$, x is the thickness of the heat-absorbing composite material in mm, S is the area of the first surface in mm$^2$, a is the area of an orthographic projection of the skeleton on the first surface in mm$^2$, H is the thickness of the skeleton in mm, $Q_c$ is the capacity of the battery core in kJ, $c_p$ is the specific heat capacity of the battery core in kJ·kg$^{-1}$·K$^{-1}$, and M is the mass of the battery core in kg.

Optionally, the values of r, p, x, S, a, H, $Q_c$, $c_p$, and M satisfy: $0.5 \leq 2252 \times r \times \rho (S \times x - a \times H) \times 10^{-9}/(0.6 \times Q_c - 360 \times c_p \times M) \leq 15$.

Optionally, r ranges from 80% to 99%.

Optionally, p ranges from 900 kg/m$^3$ to 1,200 kg/m$^3$.

Optionally, x ranges from 0.35 mm to 7 mm.

Optionally, S ranges from 5,000 mm$^2$ to 600,000 mm$^2$.

Optionally, a ranges from 500 mm$^2$ to 270,000 mm$^2$.

Optionally, H ranges from 0.025 mm to 20 mm.

Optionally, $Q_c$ ranges from 576 kJ to 3,456 kJ.

Optionally, $c_p$ ranges from 0.8 kJ·kg$^{-1}$·K$^{-1}$ to 1.2 kJ·kg$^{-1}$·K$^{-1}$.

Optionally, M ranges from 1 kg to 5 kg.

Optionally, the skeleton includes at least one sub-skeleton in the thickness direction of the skeleton. H satisfies $H = n \times xt$, where n is the number of the sub-skeletons in the heat-absorbing composite material, and $x_1$ is the thickness of the sub-skeletons in mm.

Further, n is an integer of 1 to 10.

Further, $x_1$ ranges from 0.025 mm to 2 mm.

Optionally, H ranges from 0.05 mm to 5 mm.

Optionally, the values of S and a satisfy: $0.1 \leq a/S \leq 0.45$.

Optionally, the values of r, x, S, a, and H satisfy: $r \times (x \times S - a \times H) \geq 11,000$.

Optionally, the values of x, a, H, and S satisfy: $a \times H/(x \times S) \geq 0.02$.

Optionally, the values of x and H satisfy: $1 < x/H \leq 18$.

Optionally, the heat-absorbing material includes a matrix and the phase-change material. The matrix is a hydrophilic polymer material. The phase-change material in the heat-absorbing material is thermally detachable from the matrix.

Further, the heat-absorbing material is a hydrogel.

Optionally, the holes penetrate through the skeleton along the thickness direction of the skeleton.

Further, the holes uniformly penetrate through the skeleton along the thickness direction of the skeleton.

In a second aspect, the present disclosure provides a heat absorber, including a packaging structure and the heat-absorbing composite material described in the first aspect. An accommodating space is provided inside the packaging structure. The heat-absorbing composite material is arranged in the accommodating space.

In a third aspect, the present disclosure provides a battery assembly. The battery assembly includes a battery core and the heat absorber described in the second aspect. The heat absorber is arranged on a surface of the battery core. Or the battery assembly includes a battery core and the heat-absorbing composite material described in the first aspect. The heat-absorbing composite material is arranged on a surface of the battery core.

Optionally, the battery core has a third surface. The third surface is attached to a first surface. The surface area of the third surface is greater than or equal to the surface area of the first surface; and/or, a projection of the first surface on the third surface is received on the third surface; and/or, the shape of the first surface is the same as the shape of the third surface.

In a fourth aspect, the present disclosure provides an electrical device, including the battery assembly described in the third aspect.

According to the heat-absorbing composite material provided in the present disclosure, the range of a relationship among the values of r, p, x, S, a, H, $Q_c$, $c_p$, and M is restricted to ensure the heat-absorbing performance of the heat-absorbing composite material and to achieve excellent mechanical performance. Therefore, the integrity of an overall structure can be maintained even when the heat-absorbing composite material is subjected to an external force, so that the comprehensive performance of the heat-absorbing composite material is excellent, and the safety of the battery assembly can be improved. The heat absorber with the heat-absorbing composite material has excellent heat-absorbing performance and mechanical performance, and the use of the electrical device is further facilitated.

## BRIEF DESCRIPTION OF THE DRAWINGS

In order to more clearly explain the technical solutions in examples of the present disclosure or in the related art, the drawings to be used in the description of the examples or the related art will be briefly introduced below. Specific examples described herein are merely used to explain the present disclosure but are not intended to limit the present disclosure.

FIG. 1 is a schematic cross-sectional view of a heat-absorbing composite material according to an example of the present disclosure.

FIG. 2 is a schematic structural diagram of a skeleton according to an example of the present disclosure.

FIG. 3 is a top view of a skeleton according to an example of the present disclosure.

FIG. 4 is an enlarged view of a partial region in FIG. 3.

FIG. 5 is a schematic structural diagram of two sub-skeletons according to an example of the present disclosure.

FIG. 6 is a schematic cross-sectional view of a heat-absorbing composite material according to another example of the present disclosure.

FIG. 7 is a schematic cross-sectional view of a heat absorber according to an example of the present disclosure.

FIG. 8 is a schematic cross-sectional view of a battery assembly according to an example of the present disclosure.

FIG. 9 is a schematic cross-sectional view of a battery assembly according to another example of the present disclosure.

## DETAILED DESCRIPTION

The technical solutions in examples of the present disclosure will be clearly and completely described below with reference to the accompanying drawings in the examples of the present disclosure. It will be appreciated that, the described examples are merely some rather than all of the examples of the present disclosure. Based on the examples of the present disclosure, all other examples obtained by a person of ordinary skill in the art without making creative efforts fall within the scope of protection of the present disclosure.

Heat generated during the use of a battery core, as well as the thermal runaway of the battery core caused by thermal abuse and mechanical abuse, will affect the use of the battery core. A current heat-absorbing material has weak compression resistance and cannot effectively reduce the heat of the battery core and prevent the occurrence of thermal runaway when subjected to an external force (e.g., expansion force generated by the expansion of the battery core), thereby affecting the use of the battery core. Although a heat-absorbing skeleton may be matched with the heat-absorbing material to improve the compression resistance of the heat-absorbing material, the heat-absorbing skeleton occupies use space, so that the amount of the heat-absorbing material will be reduced or the overall weight will be increased, and the heat-absorbing material cannot be efficiently used in the battery core.

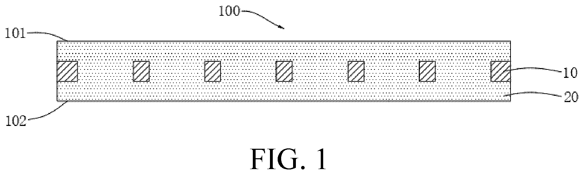

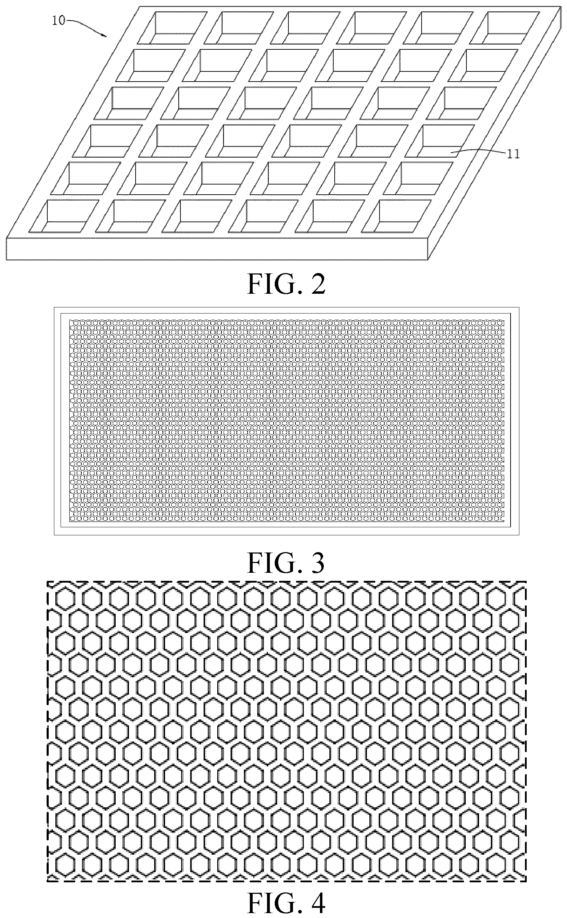

FIG. 1 is a schematic cross-sectional view of a heat-absorbing composite material according to an example of the present disclosure, and FIG. 2 is a schematic structural diagram of a skeleton according to an example of the present disclosure. A heat-absorbing composite material 100 is configured to be arranged on a surface of a battery core, and includes a skeleton 10 and a heat-absorbing material 20. The heat-absorbing material 20 comprises a phase-change material. The skeleton 10 has multiple holes 11. The holes 11 are filled with the heat-absorbing material 20. The heat-absorbing composite material 100 has a first surface 101 and a second surface 102 oppositely arranged along a thickness direction of the skeleton 10. The first surface 101 is located between the second surface 102 and the battery core. Values r, $\rho$, x, S, a, H, $Q_c$, $c_p$, and M satisfy: $0.2 \leq 2252 \times r \times \rho(S \times x - a \times H) \times 10^{-9}/(0.6 \times Q_c - 360 \times c_p \times M) \leq 30$, where r is the mass content of the phase-change material in the heat-absorbing material 20, $\rho$ is the density of the heat-absorbing material 20 in $kg/m^3$, x is the thickness of the heat-absorbing composite material 100 in mm, S is the area of the first surface 101 in $mm^2$, a is the area of an orthographic projection of the skeleton 10 on the first surface 101 in $mm^2$, H is the thickness of the skeleton 10 in mm, $Q_c$ is the capacity of the battery core in kJ, $c_p$ is the specific heat capacity of the battery core in $kJ \cdot kg^{-1} \cdot K^{-1}$, and M is the mass of the battery core in kg. The heat-absorbing composite material provided in the present disclosure includes a skeleton and a heat-absorbing material at least partially arranged in holes of the skeleton. A relationship among related parameters of the skeleton, the heat-absorbing material and a battery core is controlled, so that the heat-absorbing composite material has excellent heat-absorbing performance and also maintains a high level of mechanical performance, especially compression resistance. Therefore, the integrity of the overall structure can still be maintained when the heat-absorbing material is subjected to an external force (e.g., expansion force generated by the expansion of the battery core), thereby avoiding problems such as extrusion of the heat-absorbing material, further ensuring the heat-absorbing effect thereof, and facilitating the use of the heat-absorbing composite material.

In the present disclosure, the heat-absorbing material may be selected as required, and heat is absorbed by using a phase change process of a phase-change material in the heat-absorbing material. In an example of the present disclosure, the heat-absorbing material includes a matrix and the phase-change material. The matrix is a hydrophilic polymer material. The phase-change material in the heat-absorbing material is thermally detachable from the matrix. The hydrophilic polymer material is more conducive to the accommodation of the phase-change material, thereby improving the mass content of the phase-change material in the heat-absorbing material, and enhancing the heat-absorbing performance of the heat-absorbing composite material. In an example of the present disclosure, the heat-absorbing material is a hydrogel. The phase change (liquid water to gaseous water) process of water in the hydrogel achieves the heat-absorbing performance.

In the present disclosure, r is the mass content of the phase-change material in the heat-absorbing material, and the mass content of the phase-change material in the heat-absorbing material may be measured by a thermogravimetric analyzer. The mass content of the phase-change material in the heat-absorbing material affects the heat-absorbing capacity of the heat-absorbing composite material during the heat-absorbing process. In an example of the present disclosure, r ranges from 80% to 99%, so that the heat-absorbing material has a high latent heat of phase change, and thus a large amount of heat can be absorbed in the phase change process, thereby improving the heat-absorbing performance of the heat-absorbing composite material. Specifically, r may be, but is not limited to, 80%, 81%, 82%, 83%, 84%, 85%, 86%, 87%, 88%, 89%, 90%, 91%, 92%, 93%, 94%, 95%, 96%, 97%, 98%, or 99%, etc. In an example of the present disclosure, r may range from 82% to 95%, thereby further improving the heat-absorbing performance of the heat-absorbing material, and also improving the mechanical capacity of the heat-absorbing material to a certain extent, which is conducive to improving the performance of the heat-absorbing composite material. In another example of the present disclosure, r may range from 85% to 90%. In another example of the present disclosure, r may range from 87% to 95%. In an example of the present disclosure, the phase-change material may be water.

In the present disclosure, $\rho$ is the density of the heat-absorbing material, and the density of the heat-absorbing material may be calculated by detecting the mass and volume of the heat-absorbing material. In an example of the present disclosure, $\rho$ ranges from 900 $kg/m^3$ to 1,200 $kg/m^3$. The density of the heat-absorbing material is suitable, thereby avoiding excessive density and excessive increase in the weights of the heat-absorbing composite material and the heat absorber, which is conducive to the use of the heat absorber in a battery assembly and further improves the energy density of the battery assembly. Specifically, $\rho$ may be, but is not limited to, 900 $kg/m^3$, 920 $kg/m^3$, 950 $kg/m^3$, 980 $kg/m^3$, 1,000 $kg/m^3$, 1,030 $kg/m^3$, 1,050 $kg/m^3$, 1,070 $kg/m^3$, 1,100 $kg/m^3$, 1,110 $kg/m^3$, 1,130 $kg/m^3$, 1,150 $kg/m^3$, 1,160 $kg/m^3$, 1,190 $kg/m^3$, or 1,200 $kg/m^3$, etc. In an example of the present disclosure, p may range from 950 $kg/m^3$ to 1,050 $kg/m^3$. In another example of the present disclosure, p may range from 1,000 $kg/m^3$ to 1,200 $kg/m^3$.

In the present disclosure, the mass content of the phase-change material in the heat-absorbing material and the density of the heat-absorbing material collectively affect the total heat absorption of the heat-absorbing composite material. In an example of the present disclosure, r ranges from 80% to 99%, and p ranges from 900 $kg/m^3$ to 1,200 $kg/m^3$, so that the total heat absorption and mass of the heat-absorbing composite material are both considered. In other words, the heat-absorbing composite material has high total heat absorption and low mass, so that the heat-absorbing composite material can better protect the battery core when used in the heat absorber, prevent thermal runaway of the battery core and heat transfer between the battery cores, also ensure the proportion of the battery core in the battery assembly, and improve the volume energy density of the battery assembly.

In the present disclosure, the skeleton can play the role of supporting, fixing and limiting the heat-absorbing material, and improve the mechanical performance of the heat-absorbing composite material. The skeleton has multiple holes. The holes are filled with the heat-absorbing material. The heat-absorbing material may fill all the holes or may fill some of the holes. The shape of openings of the holes of the skeleton may be, but is not limited to, a polygon (e.g., square, rectangle, hexagon, octagon, diamond, triangle, etc.), a circle, an ellipse, a semicircle, an irregular shape, or the like, and may be selected as required.

In an example of the present disclosure, the holes penetrate through the skeleton along the thickness direction of the skeleton. It will be appreciated that a direction from the first surface to the second surface is the thickness direction of the skeleton. In other words, such holes are through holes, which are conducive to the filling and dispersion of the heat-absorbing material. In another example of the present disclosure, the holes do not penetrate through the skeleton along the thickness direction of the skeleton. Such holes are blind holes, which are conducive to the loading of the heat-absorbing material. In the present disclosure, the holes in the skeleton may be through holes, may be blind holes, or may be through holes and blind holes in part. In an example of the present disclosure, all the holes penetrate through the skeleton along the thickness direction of the skeleton. In another example of the present disclosure, the holes uniformly penetrate through the skeleton along the thickness direction of the skeleton. In other words, along the thickness direction of the skeleton, the holes have the same aperture diameter in the cross section perpendicular to the thickness direction of the skeleton, which is beneficial to uniformly filling the heat-absorbing material in the skeleton and improving the overall supporting performance of the skeleton.

In an example of the present disclosure, as shown in FIG. 2, the shape of the openings of the holes 11 of the skeleton 10 is a square. FIG. 3 is a top view of a skeleton according to an example of the present disclosure, and FIG. 4 is an enlarged view of a partial region in FIG. 3. It can be seen that openings of the holes of the skeleton are hexagonal.

In an example of the present disclosure, the material of the skeleton may be, but is not limited to, at least one of polyester, polypropylene, and glass fiber. The supporting performance and mechanical performance of the skeleton made of the above materials are better.

In the present disclosure, H is the thickness of the skeleton, which may be obtained by measurement. H may be specifically measured with, but not limited to, a vernier caliper. In an example of the present disclosure, the thickness of the skeleton is smaller than the thickness of the heat-absorbing composite material, thereby ensuring the proportion of the heat-absorbing material in the heat-absorbing composite material, and improving the heat-absorbing performance of the heat-absorbing composite material. In an example of the present disclosure, H ranges from 0.025 mm to 20 mm, which is conducive to improving the mechanical performance of the heat-absorbing composite material and ensuring the heat-absorbing performance of the heat-absorbing composite material. Specifically, H may be, but is not limited to, 0.025 mm, 0.05 mm, 0.1 mm, 0.3 mm, 0.5 mm, 1 mm, 2 mm, 3 mm, 4 mm, 5 mm, 7 mm, 9 mm, 10 mm, 15 mm, 18 mm, or 20 mm, etc. Further, in an example of the present disclosure, H may range from 0.05 mm to 10 mm. Furthermore, in an example of the present disclosure, H may range from 0.05 mm to 5 mm. It is conducive to further ensuing the overall thickness of the skeleton in the heat-absorbing composite material, improving the mechanical performance of the heat-absorbing composite material, and ensuring the content of the heat-absorbing material in the heat-absorbing composite material, so that the mechanical performance (e.g., compression resistance, etc.) and heat-absorbing performance of the heat-absorbing composite material can be both considered. Furthermore, it can be ensured that the heat-absorbing composite material is applied to a battery pack, and the reduction rate of the volume energy density of the battery pack is maintained within a reasonable range. In other words, the value of H satisfies: $0.05 \leq H \leq 5$. Specifically, a lower limit value of H may be, but is not limited to, 0.05, 0.08, 0.1, 0.2, 0.3, 0.4, 0.5, 0.6, 0.7, 0.8, 0.9, 1, 1.3, 1.5, 1.7, 1.8, 2, 2.3, or 2.5, etc., and an upper limit value of H may be, but is not limited to, 1, 1.2, 1.5, 1.9, 2, 2.5, 2.8, 3, 3.3, 3.5, 3.7, 4, 4.3, 4.5, 4.9, or 5, etc.

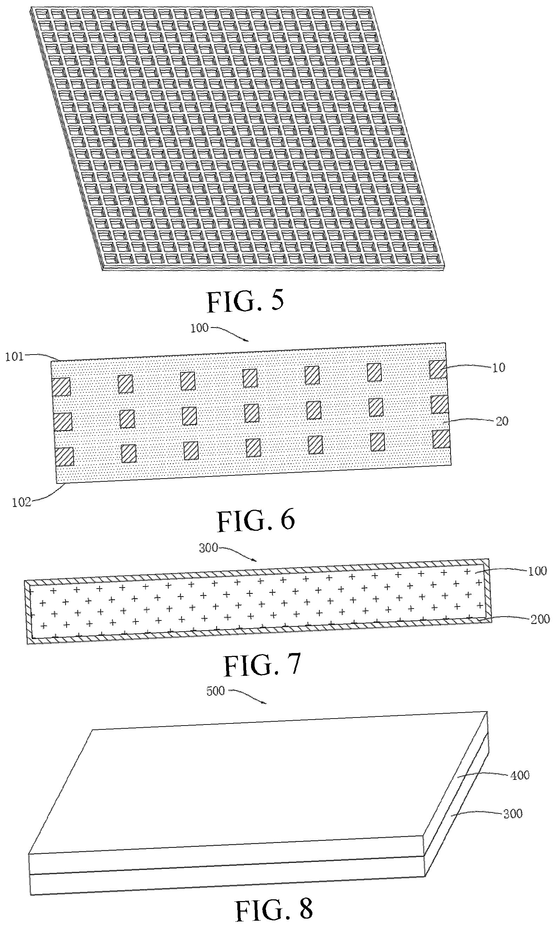

In an example of the present disclosure, the skeleton includes at least one sub-skeleton along the thickness direction of the skeleton. In other words, one or more sub-skeletons are stacked to form the skeleton. H satisfies $H = n \times x_1$, where n is the number of the sub-skeletons in the heat-absorbing composite material, n is an integer greater than or equal to 1, and $x_1$ is the thickness of the sub-skeletons in mm. In an example of the present disclosure, n is an integer of 1 to 10. In other words, the number of the sub-skeletons in the heat-absorbing composite material may be, but is not limited to, 1, 2, 3, 4, 5, 6, 7, 8, 9, or 10, etc. The number of the sub-skeletons in the heat-absorbing composite material improves the mechanical performance of the heat-absorbing composite material. Also, the number will not increase the weight of the heat-absorbing composite material too much and reduce the proportion of the heat-absorbing material in the heat-absorbing composite material, thereby ensuring the heat-absorbing performance of the heat-absorbing composite material and reducing the preparation difficulty of the heat-absorbing composite material. In an example of the present disclosure, as shown in FIG. 1, the skeleton 10 in the heat-absorbing composite material 100 includes one sub-skeleton. FIG. 5 is a schematic structural diagram of two sub-skeletons according to an example of the present disclosure. The heat-absorbing composite material includes two sub-skeletons. The two sub-skeletons are stacked along the thickness direction thereof. FIG. 6 is a schematic cross-sectional view of a heat-absorbing composite material according to another example of the present disclosure. The skeleton 10 in the heat-absorbing composite material 100 includes three sub-skeletons. In an example of the present disclosure, the heat-absorbing composite material has multiple sub-skeletons. The sub-skeletons are stacked along the thickness direction thereof. The sub-skeletons have multiple holes penetrating through the sub-skeletons along the thickness direction of the sub-skeletons. At least some of the holes of two adjacent sub-skeletons are communicated to form the holes of the skeleton, which are more conducive to filling the heat-absorbing material. In an example of the present disclosure, the heat-absorbing composite material has multiple sub-skeletons, and holes of two adjacent sub-skeletons are aligned and communicated one by one to form the holes of the skeleton.

In the present disclosure, $x_1$ is the thickness of the sub-skeletons, which may be obtained by measurement and may be specifically measured with, but not limited to, a vernier caliper. In an example of the present disclosure, $x_1$ ranges from 0.025 mm to 2 mm, which can support the heat-absorbing material, improve the mechanical performance of the heat-absorbing composite material, ensure the proportion of the heat-absorbing material in the heat-absorbing composite material, and also ensure the heat-absorbing performance of the heat-absorbing composite material. Specifically, $x_1$ may be, but is not limited to, 0.025 mm, 0.03 mm, 0.05 mm, 0.07 mm, 0.1 mm, 0.3 mm, 0.5 mm, 0.8 mm, 1 mm, 1.2 mm, 1.5 mm, 1.7 mm, 1.9 mm, or 2 mm, etc. In an example of the present disclosure, $x_1$ may range from 0.05 mm to 1 mm. In another example of the present disclosure, $x_1$ may range from 1 mm to 2 mm.

In the present disclosure, the skeleton and the heat-absorbing material in the heat-absorbing composite material are stacked, and the heat-absorbing material also fills the holes of the skeleton, where the thickness direction of the skeleton is a stacked direction. The heat-absorbing composite material has a first surface and a second surface oppositely arranged along the thickness direction of the skeleton. The first surface is located between the second surface and the battery core. In other words, the first surface may be attached to the battery core directly or indirectly. S is the area of the first surface, where the size of the first surface may be measured according to the shape of the first surface to calculate the area of the first surface. In an example of the present disclosure, S ranges from 5,000 mm$^2$ to 600,000 mm$^2$, so that the heat-absorbing area of the heat-absorbing composite material is larger, the heat-absorbing effect of the heat-absorbing composite material is improved, and waste caused by excessive area can be avoided. Specifically, S may be, but is not limited to, 5,000 mm$^2$, 10,000 mm$^2$, 30,000 mm$^2$, 50,000 mm$^2$, 70,000 mm$^2$, 100,000 mm$^2$, 200,000 mm$^2$, 300,000 mm$^2$, 400,000 mm$^2$, 500,000 mm$^2$, or 600,000 mm$^2$, etc. In an example of the present disclosure, S may range from 5,000 mm$^2$ to 50,000 mm$^2$. In another example of the present disclosure, S may range from 50,000 mm$^2$ to 300,000 mm$^2$. In still another example of the present disclosure, S may range from 300,000 mm$^2$ to 600,000 mm$^2$. In an example of the present disclosure, the battery core has a third surface. The third surface is attached to the first surface, where the surface area of the third surface is greater than or equal to the surface area of the first surface; and/or, a projection of the first surface on the third surface is received on the third surface; and/or, the shape of the first surface is the same as the shape of the third surface. In other words, the area of the third surface is greater than or equal to the area of the first surface, and/or a projection of the first surface on the third surface falls onto the third surface, and/or the shape of the first surface is the same as the shape of the third surface, so that the first surface of the heat-absorbing composite material may be completely attached to the surface of the battery core, thereby improving the heat-absorbing effect of the heat-absorbing composite material. Preferably, the heat-absorbing composite material is directly attached to the third surface of the battery core in general. Therefore, the area of the third surface of the battery core is the area of the first surface of the heat-absorbing composite material to simplify the measurement difficulty.

In the present disclosure, a is the area of an orthographic projection of the skeleton on the first surface. The heat-absorbing composite material has a first surface and a second surface oppositely arranged in the thickness direction of the skeleton. The area of the orthographic projection of the skeleton on the first surface is the area of an orthographic projection of a solid structure of the skeleton on the first surface. It will be appreciated that when the holes do not penetrate through the skeleton, the area of the orthographic projection of the skeleton on the first surface is the entire area of the orthographic projection of the skeleton on the first surface. When the holes at least partially penetrate through the skeleton, the area of the orthographic projection of the skeleton on the first surface is the area of an orthographic projection of non-penetrating holes of the skeleton on the first surface. Multiple methods for measuring the area of the orthographic projection of the skeleton on the first surface are present. For example, the area may be measured by subtracting the area of the orthographic projection of penetrating holes from the area of the orthographic projection of the entire skeleton (including the penetrating holes), where the area of the orthographic projection may be calculated by geometric structure parameters. The area of the orthographic projection of the skeleton (excluding the penetrating holes) may also be directly obtained through three-dimensional numerical simulation. The specific operation method may be selected as required. In an example of the present disclosure, a ranges from 500 mm$^2$ to 270,000 mm$^2$, which can ensure the fixing and protective effects of the skeleton on the heat-absorbing material, and also ensure the heat-absorbing performance of the heat-absorbing composite material. Specifically, a may be, but is not limited to, 500 mm$^2$, 1000 mm$^2$, 3000 mm$^2$, 5,000 mm$^2$, 8,000 mm$^2$, 10,000 mm$^2$, 30,000 mm$^2$, 70,000 mm$^2$, 90,000 mm$^2$, 100,000 mm$^2$, 140,000 mm$^2$, 150,000 mm$^2$, 180,000 mm$^2$, 200,000 mm$^2$, 220,000 mm$^2$, 250,000 mm$^2$, or 270,000 mm$^2$, etc.

In an example of the present disclosure, the values of S and a satisfy: $0.1 \leq a/S \leq 0.45$, thereby not only ensuring the fixing and protective effects of the skeleton on the heat-absorbing material and preventing the heat-absorbing material from being damaged when the heat-absorbing composite material is subjected to an external force, but also ensuring the proportion of the heat-absorbing material in the heat-absorbing composite material and improving the heat-absorbing performance of the heat-absorbing composite material. Specifically, a/S may be, but is not limited to, 0.1, 0.12, 0.15, 0.18, 0.2, 0.23, 0.25, 0.27, 0.3, 0.33, 0.35, 0.36, 0.38, 0.4, 0.41, 0.43, or 0.45, etc. In an example of the present disclosure, a/S may range from 0.1 to 0.2. In another example of the present disclosure, a/S may range from 0.2 to 0.3. In still another example of the present disclosure, a/S may range from 0.36 to 0.45.

In the present disclosure, x is the thickness of the heat-absorbing composite material, which may be obtained by measurement. x may be specifically measured with, but not limited to, a vernier caliper. In an example of the present disclosure, x ranges from 0.35 mm to 7 mm, which not only ensures the heat-absorbing effect of the heat-absorbing composite material, but also makes the heat-absorbing composite material have a lower mass and is thus conducive to the use of the heat-absorbing composite material in the battery assembly. Specifically, x may be, but is not limited to, 0.35 mm, 0.5 mm, 0.8 mm, 1 mm, 1.5 mm, 2 mm, 2.8 mm, 3 mm, 3.5 mm, 4 mm, 4.3 mm, 5 mm, 5.7 mm, 6 mm, 6.5 mm, or 7 mm, etc. In an example of the present disclosure, x may range from 0.35 mm to 2.7 mm, which is conducive to a further increase of the volume energy density in the battery assembly and is more conducive to the use of the battery assembly. In another example of the present disclosure, x may range from 2 mm to 4 mm. In still another example of the present disclosure, x may range from 4 mm to 7 mm.

In an example of the present disclosure, the values of r, x, S, a, and H satisfy: $r\times(x\times S-a\times H)\geq11,000$, so that the heat-absorbing composite material has high heat-absorbing performance and may be applied to heat dissipation of a large-capacity battery core, and the use safety of the battery core is improved. Specifically, the value of $r\times(x\times S-a\times H)$ may be, but is not limited to, 11,000 or more, 12,000 or more, 14,000 or more, 15,000 or more, 18,000 or more, 19,000 or more, 20,000 or more, 21,000 or more, 23,000 or more, 25,000 or more, 27,000 or more, 29,000 or more, 30,000 or more, 40,000 or more, or 50,000 or more, etc.

In an example of the present disclosure, the values of x, a, and H satisfy: $a\times H/(x\times S)\geq0.02$, which is conducive to further improving the compression resistance of the heat-absorbing composite material, preventing the deformation of the heat absorber, increasing the compressive strength of the heat absorber, and making the heat-absorbing composite material have better structural reliability under the force generated by the battery core or other external forces. Specifically, the value of $a\times H/(x\times S)$ may be, but is not limited to, 0.02 or more, 0.025 or more, 0.04 or more, 0.06 or more, 0.09 or more, 0.1 or more, 0.15 or more, 0.2 or more, 0.25 or more, 0.3 or more, 0.4 or more, 0.5 or more, 0.6 or more, or 0.7 or more, etc. Furthermore, since $a\times H/(x\times S)\geq0.02$ may be understood as the volume ratio of the skeleton to the heat-absorbing composite material, when $a\times H/(x\times S)\leq0.02$, the proportion of the skeleton volume is too small, and the overall deformation or compression capacity of the heat-absorbing composite material is provided by the phase-change material. Then the phase-change material will diffuse out of a battery core gap due to the influence of the battery expansion force or pre-load force, thus causing the deformation of the heat-absorbing composite material, and posing safety risks in practical applications.

In an example of the present disclosure, the values of x and H satisfy: $1<x/H\leq18$, so that the heat-absorbing material of the heat-absorbing composite material protrudes from the skeleton in the thickness direction, and the heat-absorbing composite material has high heat-absorbing performance. Also, the mechanical performance of the heat-absorbing composite material can be further improved, the compressive strength thereof can be increased, and the heat-absorbing composite material has better structural reliability under the force generated by the battery core or other external forces. Specifically, the value of x/H may be, but is not limited to, 1.5 or less, 2 or less, 3.5 or less, 5 or less, 8 or less, 10 or less, 11 or less, 13 or less, 14 or less, or 18 or less, etc.

In the present disclosure, $Q_c$ is battery core energy (fully charged), which may be obtained through a battery load test. Specifically, $Q_c$ may be obtained indirectly by measuring the terminal voltage of the battery core and the capacity of the battery core, i.e., $Q_c=V\times q$, where V is the terminal voltage of the battery core (terminal voltage when fully charged), and q is the capacity of the battery core. The capacity of the battery core may be measured by a charge and discharge test cabinet. During the measurement, current conforming to the industrial standard, i.e., 1/3C, is used for a charge and discharge test. In an example of the present disclosure, $Q_c$ may range from 576 kJ to 3,456 kJ. The battery core may provide high electric energy, generate relatively little heat when thermal runaway occurs, and has high controllability of thermal runaway, thereby improving the use safety of the battery assembly. Specifically, $Q_c$ may be, but is not limited to, 576 kJ, 600 kJ, 750 kJ, 900 kJ, 1,000 kJ, 1,200 kJ, 1,500 kJ, 1,850 kJ, 2,000 kJ, 2,200 kJ, 2,500 kJ, 2,800 kJ, 3,000 kJ, 3,050 kJ, or 3,300 kJ, etc. In an example of the present disclosure, $Q_c$ may range from 576 kJ to 1,500 kJ. In another example of the present disclosure, $Q_c$ may range from 1,500 kJ to 3,456 kJ.

In the present disclosure, $c_p$ is the specific heat capacity of the battery core, which is detected by an instrument such as a heat capacity meter. In an example of the present disclosure, $c_p$ ranges from 0.8 kJ·kg$^{-1}$·K$^{-1}$ to 1.2 kJ·kg$^{-1}$·K$^{-1}$. Specifically, $c_p$ may be, but is not limited to, 0.8 kJ·kg$^{-1}$·K$^{-1}$, 0.85 kJ·kg$^{-1}$·K$^{-1}$, 0.9 kJ·kg$^{-1}$·K$^{-1}$, 0.93 kJ·kg$^{-1}$·K$^{-1}$, 0.95 kJ·kg$^{-1}$·K$^{-1}$, 1 kJ·kg$^{-1}$·K$^{-1}$, 1.1 kJ·kg$^{-1}$·K$^{-1}$, or 1.2 kJ·kg$^{-1}$·K$^{-1}$, etc. The specific heat capacity of the battery core refers to the average specific heat capacity of all components of the battery core, where all components of the battery core may include: all components constituting the battery core such as a housing, a pole, and a pole core of the battery core.

In the present disclosure, M is the mass of the battery core, which may be obtained by weighing. In an example of the present disclosure, M ranges from 1 kg to 5 kg. Specifically, M may be, but is not limited to, 1 kg, 1.5 kg, 2 kg, 2.5 kg, 3 kg, 3.5 kg, 4 kg, 4.3 kg, 4.5 kg, 4.8 kg, or 5 kg, etc. The mass of the battery core refers to the mass sum of all components of the battery core, for example, all components constituting the battery core such as a housing, a pole, and a pole core of the battery core.

In the present disclosure, the specific heat capacity and mass of the battery core collectively affect the heat capacity of the battery core during the thermal runaway process. In an example of the present disclosure, $c_p$ ranges from 0.8 kJ·kg$^{-1}$·K$^{-1}$ to 1.2 kJ·kg$^{-1}$·K$^{-1}$, and M ranges from 1 kg to 5 kg, so that the battery core has a suitable heat capacity, thereby further ensuring the heat-absorbing effect of the heat-absorbing composite material on the battery core and further improving the use safety of the battery core.

It will be appreciated that in the present disclosure, r, p, x, S, a, H, $Q_c$, $c_p$, and M are all measured before thermal runaway and in a normal state. For example, M is the mass of a battery before thermal runaway and in a normal state. The normal state refers to a state in which the battery core may normally supply power. Values of r, p, x, S, a, H, $Q_c$, $c_p$, and M satisfy: $0.2 \leq 2252 \times r \times \rho (S \times x - a \times H) \times 10^{-9}/(0.6 \times Q_c - 360 \times c_p \times M) \leq 30$. The heat-absorbing composite material may have excellent heat-absorbing performance and mechanical performance, and when the heat-absorbing composite material is used in the battery assembly, the volume energy density of the battery assembly can be further improved, so that the battery assembly has excellent power supply capacity and safety performance. Specifically, a lower limit value of $0.2 < 2252 \times r \times \rho (S \times x - a \times H) \times 10^{-9}/(0.6 \times Q_c - 360 \times c_p \times M) \leq 30$ may be, but is not limited to, 0.2, 0.3, 0.4, 0.5, 1, 1.3, 1.5, 1.7, 2, 2.2, 2.5, 2.8, 3, 3.3, 3.5, 3.9, 4, 4.3, 4.5, 4.7, 5, 5.5, 5.8, 6, 6.4, 6.5, 6.8, 7, 7.1, 7.5, 7.6, 8, 8.3, 8.5, 8.8, 9, 9.2, 9.5, 9.6, 10, 11, 12, 13, 14, 15, 16, 17, 18, 19, or 20, etc. An upper limit value of $0.2 \leq 2252 \times r \times \rho (S \times x - a \times H) \times 10^{-9}/(0.6 \times Q_c - 360 \times c_p \times M) \leq 30$ may be, but is not limited to, 7, 7.1, 7.5, 7.6, 8, 8.3, 8.5, 8.8, 9, 9.2, 9.5, 9.6, 10, 10.2, 10.5, 10.8, 11, 11.3, 11.5, 11.7, 12, 12.4, 12.5, 12.9, 13, 13.1, 13.5, 13.7, 14, 14.2, 14.5, 14.8, 15, 16, 17, 18, 19, 21, 22, 23, 24, 25, 26, 27, 28, 29, or 30, etc. In an example of the present disclosure, the values of r, p, x, S, a, H, $Q_c$, $c_p$, and M satisfy: $0.5 < 2252 \times r \times \rho (S \times x - a \times H) \times 10^{-9}/(0.6 \times Q_c - 360 \times c_p \times M) \leq 15$, which is conducive to further improving the mechanical performance and heat-absorbing performance of the heat-absorbing composite material and the volume energy density of the battery assembly, and improving use performance and safety.

FIG. 7 is a schematic cross-sectional view of a heat absorber according to an example of the present disclosure. A heat absorber 300 includes a packaging structure 200 and a heat-absorbing composite material 100. An accommodating space is provided inside the packaging structure 200. The heat-absorbing composite material 100 is arranged in the accommodating space. The packaging structure may fix and limit the heat-absorbing composite material, ensure the use of the heat absorber, and further improve the mechanical performance of the heat absorber. The heat absorber has excellent heat-absorbing performance and mechanical performance, which is conducive to the use of the heat absorber in a battery assembly.

In the present disclosure, the packaging structure is configured to package the heat-absorbing composite material, and has an excellent water vapor barrier effect. In an example of the present disclosure, the material of the packaging structure includes aluminum. The sealing effect of the packaging structure is ensured, and the service life of the heat absorber is prolonged.

FIG. 8 is a schematic cross-sectional view of a battery assembly according to an example of the present disclosure. A battery assembly 500 includes a battery core 400 and the heat absorber 300 in any of the examples. The heat absorber 300 is arranged on a surface of the battery core 400. In another example of the present disclosure, the battery assembly includes a battery core and the heat-absorbing composite material described in any of the examples. The heat-absorbing composite material is arranged on a surface of the battery core. The battery core is susceptible to thermal use under conditions such as thermal abuse and mechanical abuse. The heat absorber or the heat-absorbing composite material provided in the present disclosure can absorb heat generated by the battery core, thereby effectively reducing the probability of thermal runaway of the battery core, and the heat absorber or the heat-absorbing composite material has good mechanical performance and good compression resistance. The structural reliability can be still maintained when the battery core expands, and the original heat-absorbing performance can be further maintained. Also, the heat absorber or the heat-absorbing composite material has a small volume proportion, which can effectively improve the proportion of the battery core in the battery assembly, improve the volume energy density of the battery assembly and is conducive to the use of the battery assembly. In the present disclosure, the battery assembly may be a battery pack or a battery module.

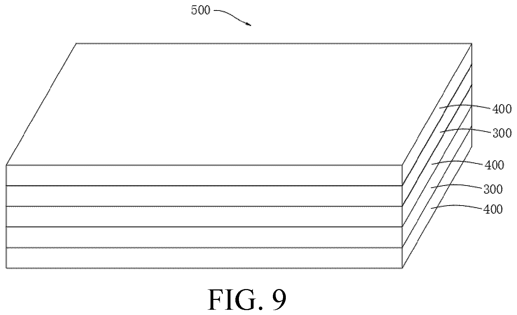

In the present disclosure, the battery assembly may include one or more battery cores. FIG. 9 is a schematic cross-sectional view of a battery assembly according to another example of the present disclosure. A battery assembly 500 includes multiple battery cores 400. The heat absorber 300 is arranged between adjacent battery cores 400. The arrangement of the heat absorber can also prevent a battery core from being transmitted to an adjacent battery core during thermal runaway, so that the normal battery core can continue to work, thereby ensuring the use performance of the battery assembly. It will be appreciated that the battery core or the heat absorber, which is not limited, may be provided at the outermost side of the battery assembly along a laminated direction of the battery core and the heat absorber.

The present disclosure provides an electrical device, including a battery assembly. The electrical device provided in the present disclosure has excellent use performance and service life, and has strong product competitiveness.

Specifically, the electrical device may refer to a vehicle, an electronic device, an energy storage system, etc.

Hereinafter, the effects of the technical solution of the present disclosure will be further described with specific examples.

Example A1

A heat-absorbing composite material is configured to be attached to a surface of a battery core, and includes a skeleton and a heat-absorbing material (hydrogel). The skeleton has holes penetrating through the skeleton along a thickness direction of the skeleton. The heat-absorbing material fills the holes.

Examples A2 to A35

These examples are approximately the same as Example A1 except for at least one of the mass content (r) of water in the heat-absorbing material, the density (p) of the heat-absorbing material, the thickness (x) of the heat-absorbing composite material, the area (S) of a first surface, the ratio (a) of the area of an orthographic projection of the skeleton on the first surface to the area of the first surface, the number (n) of sub-skeletons in the skeleton, and the thickness (xi) of the sub-skeletons.

Comparative Examples A1 to A9

These examples are approximately the same as Example A1 except for at least one of the mass content (r) of water in the heat-absorbing material, the density (p) of the heat-absorbing material, the thickness (x) of the heat-absorbing composite material, the area (S) of a first surface, the ratio (a) of the area of an orthographic projection of the skeleton on the first surface to the area of the first surface, the number (n) of sub-skeletons in the skeleton, and the thickness (xi) of the sub-skeletons.

Example B1

The heat-absorbing composite material in Example A1 is placed in an accommodating space of a packaging structure (made of an aluminum-plastic film) having a thickness of 0.05 mm to obtain a heat absorber.

Example B2 to B35

These examples are approximately the same as Example B1 except that the heat-absorbing composite material is sequentially replaced with the heat-absorbing composite material in Examples A2-A35.

Comparative Examples B1 to B9

These examples are approximately the same as Example B1 except that the heat-absorbing composite material is sequentially replaced with the heat-absorbing composite material in Comparative Examples A1 to A9.

Example C1

The heat absorber in Example B1 is placed between two identical battery cores to obtain a battery assembly.

Examples C2 to C35

These examples are approximately the same as Example C1 except that the heat absorber is sequentially replaced with the heat absorber in Examples B2 to B35.

Comparative Examples C1 to C9

These examples are approximately the same as Example C1 except that the heat absorber is sequentially replaced with the heat absorber in Comparative Examples B1 to B9.

Performance Detection

The mass content (r) of water in the heat-absorbing material, the density (p) of the heat-absorbing material, the thickness (x) of the heat-absorbing composite material, the area (S) of the first surface, the ratio (a) of the area of the orthographic projection of the skeleton on the first surface to the area of the first surface, the number (n) of the sub-skeletons in the skeleton, and the thickness (xi) of the sub-skeletons in the heat-absorbing composite material in Examples A1-A35 and Comparative Examples A1 to A9 are detected, and the value of a/S is calculated. The results are as shown in Table 1.

The capacity ($Q_c$) of the battery core, the specific heat capacity ($c_p$) of the battery core, and the mass (M) of the battery core in Examples C1 to C35 and Comparative Examples C1 to C9 are detected. The results are shown in Table 2.

According to data in Table 1 and Table 2, the value of $2252 \times r \times \rho(S \times x - a \times H) \times 10^{-9}/(0.6 \times Q_c - 360 \times c_p \times M)$ is calculated to obtain a result of Formula I. The value of $n \times x_1$ (i.e., the thickness value H of the skeleton in the heat-absorbing composite material) is calculated to obtain a result of Formula II. The value of $r \times (x \times S - a \times H)$ is calculated to obtain a result of Formula III. The value of $a \times H/(x \times S)$ is calculated to obtain a result of Formula IV. The value of x/H is calculated to obtain a result of Formula V. The volume energy density (Wh/L) of the battery assembly is equal to the product (W·h) of the number of battery cores in the battery assembly and the energy of a single battery core divided by the volume (L) of the battery assembly. The volume energy density of the battery assembly in which only multiple battery cores are arranged is $w_0$ under the conditions of the same volume of the battery assembly and the capacity of a single battery core. The volume energy density of the battery assembly in which the battery core and the heat-absorbing composite material are alternately arranged in the manner of Examples C1 to C35 and Comparative Examples C1 to C9 is $w_1$. The reduction degree (($w_0$-$w_1$)/$w_0$) of the volume energy density is reduced to obtain a result of Formula VI (keeping three decimal places). The results are shown in Table 3.

A nail penetration experiment is performed on one of the battery cores in the battery assembly in Examples C1 to C35 and Comparative Examples C1 to C9 to detect whether thermal diffusion occurs on another battery core. The nail penetration experiment includes: when the state of charge (SOC) of battery cores is 100% and the initial temperature of all the battery cores in the battery assembly is 45°C ± 2°C, penetrating a straight steel nail of 5 mm into one of the battery cores at a speed of 1 mm/s, and stopping penetration after runaway (thermal runaway of a battery core means that an explosion-proof valve of the battery core is turned on and the voltage of the battery core is reduced to less than 20% of the initial voltage); pulling the nail out after 2 min, where the maximum depth is 80 mm; continuing the observation until the temperature of all the battery cores in the battery assembly is less than 100°C; recording whether thermal diffusion occurs in an adjacent battery core during this process (if an explosion-proof valve of the adjacent battery core is turned on and the voltage of the battery core is reduced to less than 20% of the initial voltage, recording that thermal diffusion occurs); and disassembling the battery assembly, and observing whether the heat-absorbing composite material is damaged. The results are shown in Table 4.

Table 1 Detection Results of Heat-Absorbing Composite Material

|  | r | $\rho$ (kg/m³) | x (mm) | S (mm²) | a/S | n | $x_1$ (mm) |
|---|---|---|---|---|---|---|---|
| Example A1 | 0.85 | 1000 | 0.60 | 47790 | 0.30 | 2 | 0.25 |
| Example A2 | 0.85 | 1000 | 0.60 | 47790 | 0.30 | 2 | 0.25 |
| Example A3 | 0.85 | 1000 | 0.50 | 47790 | 0.30 | 1 | 0.10 |
| Example A4 | 0.85 | 1000 | 0.50 | 47790 | 0.10 | 1 | 0.10 |
| Example A5 | 0.85 | 1000 | 0.50 | 47790 | 0.10 | 1 | 0.25 |
| Example A6 | 0.85 | 1000 | 0.65 | 65762 | 0.5 | 1 | 0.60 |
| Example A7 | 0.85 | 1000 | 0.60 | 65762 | 0.30 | 2 | 0.25 |
| Example A8 | 0.85 | 1000 | 0.60 | 65762 | 0.20 | 2 | 0.10 |
| Example A9 | 0.85 | 1000 | 2.50 | 65762 | 0.20 | 1 | 0.25 |
| Example A10 | 0.85 | 1000 | 2.50 | 65762 | 0.20 | 2 | 0.25 |
| Example A11 | 0.10 | 1000 | 0.60 | 47790 | 0.30 | 2 | 0.25 |
| Example A12 | 0.50 | 1000 | 0.60 | 47790 | 0.30 | 2 | 0.25 |
| Example A13 | 0.80 | 1000 | 0.60 | 47790 | 0.30 | 2 | 0.25 |
| Example A14 | 0.90 | 1000 | 0.60 | 47790 | 0.30 | 2 | 0.25 |
| Example A15 | 0.99 | 1000 | 0.60 | 47790 | 0.30 | 2 | 0.25 |
| Example A16 | 0.85 | 1000 | 0.10 | 47790 | 0.30 | 1 | 0.03 |
| Example A17 | 0.85 | 1000 | 0.25 | 47790 | 0.30 | 2 | 0.10 |

(continued)

| | r | $\rho$ (kg/m$^3$) | x (mm) | S (mm$^2$) | a/S | n | x$_1$ (mm) |
|---|---|---|---|---|---|---|---|
| Example A18 | 0.85 | 1000 | 0.35 | 47790 | 0.30 | 1 | 0.25 |
| Example A19 | 0.85 | 1000 | 1.00 | 47790 | 0.30 | 2 | 0.25 |
| Example A20 | 0.85 | 1000 | 2.00 | 47790 | 0.30 | 2 | 0.25 |
| Example A21 | 0.85 | 1000 | 7.00 | 47790 | 0.30 | 2 | 0.25 |
| Example A22 | 0.85 | 1000 | 11.00 | 47790 | 0.30 | 2 | 0.25 |
| Example A23 | 0.85 | 1000 | 13.00 | 47790 | 0.30 | 2 | 0.25 |
| Example A24 | 0.85 | 1000 | 0.40 | 47790 | 0.03 | 1 | 0.25 |
| Example A25 | 0.85 | 1000 | 0.40 | 47790 | 0.10 | 1 | 0.25 |
| Example A26 | 0.85 | 1000 | 0.40 | 47790 | 0.20 | 1 | 0.25 |
| Example A27 | 0.85 | 1000 | 0.40 | 47790 | 0.44 | 1 | 0.25 |
| Example A28 | 0.85 | 1000 | 0.40 | 47790 | 0.70 | 1 | 0.25 |
| Example A29 | 0.85 | 1000 | 0.40 | 47790 | 0.80 | 1 | 0.25 |
| Example A30 | 0.85 | 1000 | 0.50 | 47790 | 0.10 | 1 | 0.03 |
| Example A31 | 0.85 | 1000 | 0.50 | 47790 | 0.10 | 2 | 0.10 |
| Example A32 | 0.85 | 1000 | 0.50 | 47790 | 0.10 | 2 | 0.20 |
| Example A33 | 0.85 | 1000 | 4.00 | 47790 | 0.10 | 2 | 1.00 |
| Example A34 | 0.85 | 1000 | 12.00 | 47790 | 0.10 | 5 | 1.00 |
| Example A35 | 0.85 | 1000 | 0.53 | 47790 | 0.80 | 1 | 0.03 |
| Comparative Example A1 | 0.85 | 1000 | 0.30 | 65762 | 0.40 | 5 | 0.05 |
| Comparative Example A2 | 0.85 | 1000 | 0.30 | 47900 | 0.15 | 3 | 0.06 |
| Comparative Example A3 | 0.85 | 1000 | 1.10 | 12570 | 0.30 | 1 | 0.15 |
| Comparative Example A4 | 0.85 | 1000 | 0.40 | 47900 | 0.43 | 1 | 0.30 |
| Comparative Example A5 | 0.85 | 1000 | 5.00 | 47790 | 0.50 | 2 | 0.10 |
| Comparative Example A6 | 0.85 | 1000 | 4.80 | 47790 | 0.50 | 1 | 0.25 |
| Comparative Example A7 | 0.85 | 1000 | 4.00 | 57970 | 0.80 | 3 | 0.05 |
| Comparative Example A8 | 0.85 | 1000 | 5.00 | 57970 | 0.70 | 2 | 0.10 |
| Comparative Example A9 | 0.10 | 1000 | 0.60 | 47790 | 0.30 | 2 | 0.25 |

Table 2 Detection Results of Battery Core

| | Q$_c$ (kJ) | c$_p$ (kJ·kg$^{-1}$·K$^{-1}$) | M (kg) |
|---|---|---|---|
| Example C1 | 934.27 | 1.00 | 1.52 |
| Example C2 | 1958.40 | 1.00 | 2.95 |
| Example C3 | 2499.84 | 1.00 | 3.80 |
| Example C4 | 2073.60 | 1.00 | 3.33 |
| Example C5 | 2499.84 | 1.00 | 3.80 |
| Example C6 | 785.66 | 1.00 | 1.305 |
| Example C7 | 1958.40 | 1.00 | 2.95 |
| Example C8 | 934.27 | 1.00 | 1.305 |
| Example C9 | 1958.40 | 1.00 | 2.95 |

(continued)

|  | $Q_c$ (kJ) | $c_p$ (kJ·kg$^{-1}$·K$^{-1}$) | M (kg) |
|---|---|---|---|
| Example C10 | 1958.40 | 1.00 | 2.95 |
| Example C11 | 934.27 | 1.00 | 1.52 |
| Example C12 | 934.27 | 1.00 | 1.52 |
| Example C13 | 934.27 | 1.00 | 1.52 |
| Example C14 | 934.27 | 1.00 | 1.52 |
| Example C15 | 934.27 | 1.00 | 1.52 |
| Example C16 | 934.27 | 1.00 | 1.50 |
| Example C17 | 576.00 | 0.85 | 1.00 |
| Example C18 | 1958.40 | 1.00 | 2.95 |
| Example C19 | 1958.40 | 1.00 | 2.95 |
| Example C20 | 1958.40 | 1.00 | 2.95 |
| Example C21 | 1958.40 | 1.00 | 2.95 |
| Example C22 | 1958.40 | 1.00 | 2.95 |
| Example C23 | 1958.40 | 1.00 | 2.95 |
| Example C24 | 2499.84 | 1.00 | 3.80 |
| Example C25 | 2499.84 | 1.00 | 3.80 |
| Example C26 | 2499.84 | 1.00 | 3.80 |
| Example C27 | 2499.84 | 1.00 | 3.80 |
| Example C28 | 934.27 | 1.00 | 1.52 |
| Example C29 | 934.27 | 1.00 | 1.52 |
| Example C30 | 2073.60 | 1.00 | 3.33 |
| Example C31 | 2073.60 | 1.00 | 3.33 |
| Example C32 | 2073.60 | 1.00 | 3.33 |
| Example C33 | 2073.60 | 1.00 | 3.33 |
| Example C34 | 2073.60 | 1.00 | 3.33 |
| Example C35 | 2073.60 | 1.00 | 3.33 |
| Comparative Example C1 | 2499.84 | 1.00 | 3.80 |
| Comparative Example C2 | 2499.84 | 1.00 | 3.80 |
| Comparative Example C3 | 2499.84 | 1.00 | 3.80 |
| Comparative Example C4 | 2499.84 | 1.00 | 3.80 |
| Comparative Example C5 | 934.27 | 1.00 | 1.52 |
| Comparative Example C6 | 934.27 | 1.00 | 1.52 |
| Comparative Example C7 | 934.27 | 1.00 | 1.52 |
| Comparative Example C8 | 934.27 | 1.00 | 1.52 |
| Comparative Example C9 | 1800.27 | 1.00 | 1.52 |

Table 3 Calculation Results of Formulas

|  | Formula I | Formula II | Formula III | Formula IV | Formula V | Formula VI |
|---|---|---|---|---|---|---|
| Example C1 | 3.08 | 0.50 | 18279.7 | 0.25 | 1.20 | 0.04 |

(continued)

| | Formula I | Formula II | Formula III | Formula IV | Formula V | Formula VI |
|---|---|---|---|---|---|---|
| Example C2 | 0.36 | 0.50 | 18279.7 | 0.25 | 1.20 | 0.04 |
| Example C3 | 0.33 | 0.10 | 19092.1 | 0.06 | 5.00 | 0.04 |
| Example C4 | 0.99 | 0.10 | 19904.5 | 0.02 | 5.00 | 0.04 |
| Example C5 | 0.33 | 0.25 | 19295.2 | 0.05 | 2.00 | 0.04 |
| Example C6 | 27.61 | 0.60 | 19564.2 | 0.46 | 1.08 | 0.05 |
| Example C7 | 0.50 | 0.50 | 25154.0 | 0.25 | 1.20 | 0.04 |
| Example C8 | 0.78 | 0.20 | 31302.7 | 0.07 | 3.00 | 0.04 |
| Example C9 | 2.73 | 0.25 | 136949.4 | 0.02 | 10.00 | 0.19 |
| Example C10 | 2.67 | 0.50 | 134154.5 | 0.04 | 5.00 | 0.19 |
| Example C11 | 0.36 | 0.50 | 2150.6 | 0.25 | 1.20 | 0.04 |
| Example C12 | 1.81 | 0.50 | 10752.8 | 0.25 | 1.20 | 0.04 |
| Example C13 | 2.90 | 0.50 | 17204.4 | 0.25 | 1.20 | 0.04 |
| Example C14 | 3.26 | 0.50 | 19355.0 | 0.25 | 1.20 | 0.04 |
| Example C15 | 3.59 | 0.50 | 21290.4 | 0.25 | 1.20 | 0.04 |
| Example C16 | 0.41 | 0.03 | 3696.6 | 0.09 | 3.33 | 0.004 |
| Example C17 | 0.44 | 0.20 | 7718.1 | 0.24 | 1.25 | 0.01 |
| Example C18 | 0.22 | 0.25 | 11170.9 | 0.21 | 1.40 | 0.01 |
| Example C19 | 0.69 | 0.50 | 34528.3 | 0.15 | 2.00 | 0.04 |
| Example C20 | 1.50 | 0.50 | 75149.8 | 0.08 | 4.00 | 0.08 |
| Example C21 | 5.54 | 0.50 | 278257.3 | 0.02 | 14.00 | 0.14 |
| Example C22 | 8.78 | 1.00 | 440743.3 | 0.03 | 11.00 | 0.44 |
| Example C23 | 10.40 | 1.00 | 521986.3 | 0.023 | 13.00 | 0.52 |
| Example C24 | 0.27 | 0.25 | 15943.9 | 0.019 | 1.60 | 0.03 |
| Example C25 | 0.26 | 0.25 | 15233.1 | 0.06 | 1.60 | 0.03 |
| Example C26 | 0.24 | 0.25 | 14217.5 | 0.13 | 1.60 | 0.03 |
| Example C27 | 0.20 | 0.25 | 11780.2 | 0.28 | 1.60 | 0.03 |
| Example C28 | 1.54 | 0.25 | 9139.8 | 0.44 | 1.60 | 0.03 |
| Example C29 | 1.37 | 0.25 | 8124.3 | 0.50 | 1.60 | 0.03 |
| Example C30 | 1.00 | 0.03 | 20188.9 | 0.01 | 16.67 | 0.04 |
| Example C31 | 0.97 | 0.20 | 19498.3 | 0.04 | 2.50 | 0.04 |
| Example C32 | 0.93 | 0.40 | 18685.9 | 0.08 | 1.25 | 0.04 |
| Example C33 | 7.66 | 2.00 | 154361.7 | 0.05 | 2.00 | 0.16 |
| Example C34 | 23.19 | 5.00 | 467147.3 | 0.04 | 2.40 | 0.48 |
| Example C35 | 1.02 | 0.03 | 20554.5 | 0.045 | 17.67 | 0.02 |
| Comparative Example C1 | 0.19 | 0.25 | 11179.5 | 0.33 | 1.20 | 0.01 |
| Comparative Example C2 | 0.19 | 0.18 | 11115.2 | 0.09 | 1.67 | 0.01 |
| Comparative Example C3 | 0.19 | 0.15 | 11272.1 | 0.04 | 7.33 | 0.04 |
| Comparative Example C4 | 0.19 | 0.30 | 11033.8 | 0.32 | 1.33 | 0.02 |
| Comparative Example C5 | 33.55 | 0.20 | 199045.4 | 0.02 | 25.00 | 0.20 |

(continued)

|  | Formula I | Formula II | Formula III | Formula IV | Formula V | Formula VI |
|---|---|---|---|---|---|---|
| Comparative Example C6 | 32.01 | 0.25 | 189905.5 | 0.03 | 19.20 | 0.19 |
| Comparative Example C7 | 32.22 | 0.15 | 191185.1 | 0.03 | 26.67 | 0.16 |
| Comparative Example C8 | 40.36 | 0.20 | 239474.1 | 0.03 | 25.00 | 0.20 |
| Comparative Example C9 | 0.01 | 0.50 | 2150.6 | 0.25 | 1.20 | 0.04 |

Table 4 Nail Penetration Results

|  | Thermal diffusion | Heat-absorbing composite material |
|---|---|---|
| Example C1 | Not occurred | Structural integrity, no damage, undeformed heat absorber |
| Example C2 | Not occurred | Structural integrity, no damage, undeformed heat absorber |
| Example C3 | Not occurred | Structural integrity, no damage, undeformed heat absorber |
| Example C4 | Not occurred | Structural integrity, no damage, undeformed heat absorber |
| Example C5 | Not occurred | Structural integrity, no damage, undeformed heat absorber |
| Example C6 | Not occurred | Structural integrity, no damage, undeformed heat absorber |
| Example C7 | Not occurred | Structural integrity, no damage, undeformed heat absorber |
| Example C8 | Not occurred | Structural integrity, no damage, undeformed heat absorber |
| Example C9 | Not occurred | Structural integrity, no damage, undeformed heat absorber |
| Example C10 | Not occurred | Structural integrity, no damage, undeformed heat absorber |
| Example C11 | Not occurred | Structural integrity, no damage, undeformed heat absorber |
| Example C12 | Not occurred | Structural integrity, no damage, undeformed heat absorber |
| Example C13 | Not occurred | Structural integrity, no damage, undeformed heat absorber |
| Example C14 | Not occurred | Structural integrity, no damage, undeformed heat absorber |
| Example C15 | Not occurred | Structural integrity, no damage, undeformed heat absorber |
| Example C16 | Not occurred | Structural integrity, no damage, undeformed heat absorber |
| Example C17 | Not occurred | Structural integrity, no damage, undeformed heat absorber |
| Example C18 | Not occurred | Structural integrity, no damage, undeformed heat absorber |
| Example C19 | Not occurred | Structural integrity, no damage, undeformed heat absorber |
| Example C20 | Not occurred | Structural integrity, no damage, undeformed heat absorber |
| Example C21 | Not occurred | Structural integrity, no damage, undeformed heat absorber |
| Example C22 | Not occurred | Structural integrity, no damage, undeformed heat absorber |
| Example C23 | Not occurred | Structural integrity, no damage, undeformed heat absorber |
| Example C24 | Not occurred | Structural integrity, no damage, deformed heat absorber |
| Example C25 | Not occurred | Structural integrity, no damage, undeformed heat absorber |
| Example C26 | Not occurred | Structural integrity, no damage, undeformed heat absorber |
| Example C27 | Not occurred | Structural integrity, no damage, undeformed heat absorber |
| Example C28 | Not occurred | Structural integrity, no damage, undeformed heat absorber |
| Example C29 | Not occurred | Structural integrity, no damage, undeformed heat absorber |
| Example C30 | Not occurred | Structural integrity, no damage, deformed heat absorber |
| Example C31 | Not occurred | Structural integrity, no damage, undeformed heat absorber |
| Example C32 | Not occurred | Structural integrity, no damage, undeformed heat absorber |

(continued)

|  | Thermal diffusion | Heat-absorbing composite material |
|---|---|---|
| Example C33 | Not occurred | Structural integrity, no damage, undeformed heat absorber |
| Example C34 | Not occurred | Structural integrity, no damage, undeformed heat absorber |
| Example C35 | Not occurred | Structural integrity, no damage, undeformed heat absorber |
| Comparative Example C1 | Occurred | Structural integrity, no damage, undeformed heat absorber |
| Comparative Example C2 | Occurred | Structural integrity, no damage, undeformed heat absorber |
| Comparative Example C3 | Occurred | Structural integrity, no damage, undeformed heat absorber |
| Comparative Example C4 | Occurred | Structural integrity, no damage, undeformed heat absorber |
| Comparative Example C5 | Not occurred | Damaged packaging structure, extruded heat-absorbing material, undeformed heat absorber |
| Comparative Example C6 | Not occurred | Damaged packaging structure, extruded heat-absorbing material, undeformed heat absorber |
| Comparative Example C7 | Not occurred | Damaged packaging structure, extruded heat-absorbing material, undeformed heat absorber |
| Comparative Example C8 | Not occurred | Damaged packaging structure, extruded heat-absorbing material, undeformed heat absorber |
| Comparative Example C9 | Occurred | Structural integrity, no damage, undeformed heat absorber |

As can be seen from the result of Formula I $2252 \times r \times \rho (S \times x - a \times H) \times 10^{-9}/(0.6 \times Q_c - 360 \times c_p \times M))$ in Table 3, the results of Examples are within the range of 0.2 to 30, and the results of Comparative Examples are less than 0.2 or more than 30. As can be seen from the nail penetration experiment in Table 4, after the nail penetration experiment, no thermal diffusion occurs in the battery assembly provided in the examples, the heat-absorbing composite material has an integral structure and is not damaged, the heat-absorbing material is not extruded, the mechanical performance of the heat-absorbing composite material is excellent, and the heat-absorbing composite material can still maintain original heat-absorbing performance. After the nail penetration experiment, thermal diffusion occurs in the battery assembly provided in Comparative Examples C1 to C4 and C9, indicating that the heat-absorbing composite material provided fails to play a good heat-absorbing effect, does not stop thermal diffusion, and cannot be used. After the nail penetration experiment, although no thermal diffusion occurs in the battery assembly provided in Comparative Examples C5 to C8, the packaging structure of the heat-absorbing composite material is damaged, and the heat-absorbing composite material is extruded, indicating that the heat-absorbing composite material has bad mechanical performance and cannot be continuously used. Therefore, the heat-absorbing composite material provided in the present disclosure has excellent heat-absorbing performance and mechanical performance and can be used in the battery assembly, thereby improving the use performance of the battery assembly.

As can be seen from the result of Formula II $(n \times x_1$, i.e., H) in Table 3, compared with Examples C16, C30 and C35, the results of other Examples are within the range of 0.05 to 5, so that the heat-absorbing performance and mechanical performance of the heat-absorbing composite material are considered, and the heat-absorbing composite material can be well used.

As can be seen from the result of Formula III $r \times (x \times S - a \times H))$ in Table 3, compared with Examples C11, C12, C16, C17, C28, and C29, the results of other Examples are greater than 11,000, and the heat-absorbing composite material has a better heat-absorbing effect and can be matched with a high-capacity battery core, thereby improving the use performance of the battery core. Also, Example C11 is approximately the same as Comparative Example C9 except that a larger-capacity battery core is adopted in Comparative Example C9. As can be seen from the nail penetration experiment, thermal diffusion occurs, which can also indicate that a large-capacity battery core can be matched when the result of Formula III is greater than 11,000 and that a small-capacity battery core is applicable when the result of Formula III is less than or equal to 11,000.

As can be seen from the result of Formula IV $(a \times H/(x \times S))$ in Table 3, compared with the results of other examples, the results of Examples C24 and C30 are both less than 0.02, and the results of the nail penetration experiment show that when $a \times H/(x \times S)$ is less than 0.02, although no thermal diffusion occurs in an adjacent battery core, the battery core will extrude a heat absorber since the battery core expands and the volume proportion of the skeleton is too small, and the heat absorber is deformed. In other words, under the extrusion from a battery, a phase-change material inside the heat absorber diffuses to a gap between two adjacent batteries, and then the heat absorber is deformed. The deformation of the heat absorber refers to the obvious tensile deformation of a packaging film. Furthermore, when $a \times H/(x \times S)$ is greater than 0.02, the stiffness of the heat absorber is good, which is conducive to the use of the heat absorber in the battery assembly and prolongs the service life.

As can be seen from the result of Formula V (x/H) in Table 3, compared with Comparative Examples C5 to C8, the results of Examples and other Comparative Examples are less than 18. The heat-absorbing composite material has strong compression resistance and high mechanical performance, and will not be damaged by an expansion force generated by the battery core. The heat-absorbing composite material has an integral structure, the heat-absorbing material is not extruded, the structural reliability is high, and the heat-absorbing composite material can be well used.

As can be seen from the result of Formula VI in Table 3, compared with Examples C22, C23 and C24, the results of other Examples are less than 0.2, indicating that the reduction degree of the volume energy density in these Examples is low. In other words, by arranging the heat-absorbing composite material between adjacent battery cores, excellent heat-absorbing performance is achieved, and the volume energy density of the entire battery assembly can be ensured.

As can be seen from the value of x in Table 1, compared with Examples A22, A23 and A34, the thickness of the heat-absorbing composite material in other Examples is relatively small, so that the volume proportion of the heat-absorbing composite material in the battery assembly is relatively small, thereby improving the volume proportion of the battery core in the battery assembly, which is conducive to improving the volume energy density of the battery assembly and the use of the battery assembly.

The above description is an optional example of the present disclosure, but is not to be construed as a limitation on the scope of the present disclosure. It should be pointed out that for a person of ordinary skill in the art, several improvements and modifications may be made without departing from the principles of the present disclosure, and these improvements and modifications are also regarded as the scope of protection of the present disclosure.

## Claims

1. A heat-absorbing composite material, configured to be arranged on a surface of a battery core, comprising a skeleton and a heat-absorbing material, the heat-absorbing material comprising a phase-change material, the skeleton having a plurality of holes, the holes being filled with the heat-absorbing material, the heat-absorbing composite material having a first surface and a second surface oppositely arranged along a thickness direction of the skeleton, the first surface being located between the second surface and the battery core, and

   values of r, p, x, S, a, H, $Q_c$, $c_p$, and M satisfying: $0.2 \leq 2252 \times r \times \rho (S \times x - a \times H) \times 10^{-9}/(0.6 \times Q_c - 360 \times c_p \times M) \leq 30$, wherein r is the mass content of the phase-change material in the heat-absorbing material,
   $\rho$ is the density of the heat-absorbing material in $kg/m^3$,
   x is the thickness of the heat-absorbing composite material in mm,
   S is the area of the first area in $mm^2$,
   a is the area of an orthographic projection of the skeleton on the first surface in $mm^2$,
   H is the thickness of the skeleton in mm,
   $Q_c$ is the capacity of the battery core in kJ,
   $c_p$ is the specific heat capacity of the battery core in $kJ \cdot kg^{-1} \cdot K^{-1}$, and
   M is the mass of the battery core in kg.

2. The heat-absorbing composite material according to claim 1, wherein the values of r, p, x, S, a, H, $Q_c$, $c_p$, and M satisfy:

$$0.5 \leq 2252 \times r \times \rho (S \times x - a \times H) \times 10^{-9}/(0.6 \times Q_c - 360 \times c_p \times M) \leq 15.$$

3. The heat-absorbing composite material according to claim 1 or 2, wherein r ranges from 80% to 99%, and/or p ranges from 900 $kg/m^3$ to 1,200 $kg/m^3$.

4. The heat-absorbing composite material according to any one of claims 1 to 3, wherein x ranges from 0.35 mm to 7 mm, and/or

   S ranges from 5,000 $mm^2$ to 600,000 $mm^2$, and/or
   a ranges from 500 $mm^2$ to 270,000 $mm^2$, and/or
   H ranges from 0.025 mm to 20 mm.

5. The heat-absorbing composite material according to any one of claims 1 to 4, wherein $Q_c$ ranges from 576 kJ to 3,456

kJ,

$c_p$ ranges from 0.8 kJ·kg$^{-1}$·K$^{-1}$ to 1.2 kJ·kg$^{-1}$·K$^{-1}$, and/or
M ranges from 1 kg to 5 kg.

6. The heat-absorbing composite material according to any one of claims 1 to 5, wherein H ranges from 0.05 mm to 5 mm; and/or the skeleton comprises at least one sub-skeleton in the thickness direction of the skeleton, and H satisfies H=n×x$t$, wherein n is the number of the sub-skeletons in the heat-absorbing composite material, n is an integer of 1 to 10, $x_1$ is the thickness of the sub-skeletons in mm, and $x_1$ ranges from 0.025 mm to 2 mm.

7. The heat-absorbing composite material according to any one of claims 1 to 6, wherein the values of S and a satisfy:

$$0.1 \leq a/S \leq 0.45.$$

8. The heat-absorbing composite material according to any one of claims 1 to 7, wherein the values of r, x, S, a, and H satisfy:

$$r \times (x \times S - a \times H) \geq 11,000.$$

9. The heat-absorbing composite material according to any one of claims 1 to 8, wherein the values of x, a, H, and S satisfy:

$$a \times H/(x \times S) \geq 0.02.$$

10. The heat-absorbing composite material according to any one of claims 1 to 9, wherein the values of x and H satisfy:

$$1 < x/H \leq 18.$$

11. The heat-absorbing composite material according to any one of claims 1 to 10, wherein the heat-absorbing material comprises a matrix and the phase-change material, the matrix is a hydrophilic polymer material, and the phase-change material in the heat-absorbing material is thermally detachable from the matrix.

12. The heat-absorbing composite material according to any one of claims 1 to 11, wherein the heat-absorbing material is a hydrogel;

and/or wherein the holes penetrate through the skeleton along the thickness direction of the skeleton, preferably wherein the holes uniformly penetrate through the skeleton along the thickness direction of the skeleton.

13. A heat absorber, comprising a packaging structure and the heat-absorbing composite material according to any one of claims 1 to 12, an accommodating space being provided inside the packaging structure, and the heat-absorbing composite material being arranged in the accommodating space.

14. A battery assembly, comprising a battery core and the heat absorber according to claim 13, the heat absorber being arranged on a surface of the battery core;

or comprising a battery core and the heat-absorbing composite material according to any one of claims 1 to 12, the heat-absorbing composite material being arranged on a surface of the battery core, preferably wherein the battery core has a third surface, the third surface being attached to a first surface, wherein the surface area of the third surface is greater than or equal to the surface area of the first surface; and/or, a projection of the first surface on the third surface is received on the third surface; and/or, the shape of the first surface is the same as the shape of the third surface.

15. An electrical device, comprising the battery assembly according to claim 14.

FIG. 1

FIG. 2

FIG. 3

FIG. 4

FIG. 5

FIG. 6

FIG. 7

FIG. 8

FIG. 9

**EUROPEAN SEARCH REPORT**

Europäisches
Patentamt
European
Patent Office
Office européen
des brevets

Application Number

EP 25 16 6901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 550 662 A1 (BEIJING KEY POWER TECH CO LTD [CN]) 9 October 2019 (2019-10-09) * paragraphs [0035] - [0045], [0055]; figures 1-6 * | 1-15 | INV. H01M10/613 H01M10/659 B32B7/027 |
| A | US 2012/193180 A1 (KAWAGUCHI YASUHIKO [JP]) 2 August 2012 (2012-08-02) * the whole document * | 1-15 | |

TECHNICAL FIELDS
SEARCHED      (IPC)

H01M
B32B

The present search report has been drawn up for all claims

| Place of search | Date of completion of the search | Examiner |
|---|---|---|
| Munich | 5 August 2025 | Nogueira da Silva, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 6901

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | | Publication date | Patent family member(s) | | Publication date |
|---|---|---|---|---|---|
| EP 3550662 | A1 | 09-10-2019 | CN | 108054460 A | 18-05-2018 |
| | | | CN | 207587926 U | 06-07-2018 |
| | | | EP | 3550662 A1 | 09-10-2019 |
| | | | KR | 20190082974 A | 10-07-2019 |
| | | | US | 2020287252 A1 | 10-09-2020 |
| | | | WO | 2018099396 A1 | 07-06-2018 |
| US 2012193180 | A1 | 02-08-2012 | CN | 102695893 A | 26-09-2012 |
| | | | EP | 2492538 A1 | 29-08-2012 |
| | | | JP | 2011089547 A | 06-05-2011 |
| | | | US | 2012193180 A1 | 02-08-2012 |
| | | | WO | 2011048900 A1 | 28-04-2011 |

EPO FORM P0459

For more details about this annex : see Official Journal of the European Patent Office, No. 12/82